# EUROPEAN PATENT APPLICATION

(11) **EP 3 421 342 A1**
(43) Date of publication of application: **02.01.2019**
(21) Application number: 18180340.4
(22) Date of filing: 28.06.2018
(51) Int. Cl.: B62K 5/027

(54) **SUSPENSION SYSTEM FOR THREE-WHEELED VEHICLES**

(30) Priority: 28.06.2017 IT 201700072479
(71) Applicant: Blutec S.r.l., 65122 Pescara (IT)
(72) Inventor: CICERO, Claudio, 36100 Vicenza (IT)
(74) Representative: Fioravanti, Corrado

(57) **Abstract**

An oscillating joint (12) for three-wheeled vehicles comprises a first connecting element (14), which oscillates integrally with a tilting frame (10) of the vehicle, a second connecting element (16), which is mounted integrally to a two-wheeled trailer (11) of the vehicle, a support upright (18), pivotable integrally with the first connecting element (14), at least one pair of elastic elements (20), each having a first end (20a) hinged to the second connecting element (16), and at least one pair of rods (22), each having one end hinged to the support upright (18), and an opposite end connected to a second end (20b) of a respective elastic element (20).

## Description

### Technical sector

The present invention is, in general, in the field of three-wheeled vehicles; in particular, the invention refers to a suspension system for three-wheeled vehicles.

### Prior Art

It is known that a two-wheeled vehicle, when parked and without a rider, must have at least one supporting element to avoid falling to the ground.

Traditional ground support systems, normally called "kickstands", may be, for example, of the central type, so as to keep the vehicle in a position orthogonal to the support surface. However, the operation of such systems requires some effort on the part of the rider.

Alternatively, there are lateral kickstands, which are easier to operate, but which place the vehicle at an angle with respect to the supporting surface. Some vehicles have both systems.

The weight of the vehicle significantly influences the operation of the kickstand, making it all the more unpleasant when the operation has to be repeated frequently during intensive use of the vehicle, for example when the delivery of various goods requires multiple stops on limited journeys.

In order to overcome these problems, three-wheeled vehicles have been created in the prior art which automatically remain vertical, as in the case of so-called motorized tricycles.

Such functional simplification, however, hinders the fluidity of driving, as the centrifugal force tends to move the center of gravity of the moving vehicle outwards, with the risk of it upending (especially at high speed). This is due to the fact that the rider cannot counteract such force by moving his/her weight inwards in the curve, as is normally the case with a two-wheeled vehicle.

In order to eliminate such problem, three-wheeled vehicles capable of tilting laterally to counteract the effects of the centrifugal force described above are known.

However, this type of solution raises the question of how to support the tilting part of the vehicle when it is stationary, and requires the use of mechanical, electromechanical or electromagnetic mechanisms, which increase the structural complexity and cost of the vehicle.

### Summary of the invention

An object of the present invention is to remedy the aforementioned problems.

To achieve such a result, a suspension system capable of supporting an articulated three-wheeled vehicle in a vertical position without a kickstand is configured as an oscillating joint with elastic means to counteract the lateral tilt of the vehicle by holding it in a vertical position. A joint thus configured allows the three-wheeled vehicle to be maintained or brought back to a vertical position with the sole aid of elastic elements and mechanical levers that, when combined with each other, counteract the inclination of the vehicle to an extent sufficient to support it vertically. The force counteracting the lateral unbalance of the vehicle, due to the force of gravity, will be determined by the position of the attachment points of the elastic elements; with the attachment points in a different position, the elastic means will respond differently to the tilt of the vehicle.

More specifically, the joint connects the tilting part of the vehicle (the tilting frame) to a two-wheeled trailer, equipped with two symmetrical wheels.

The joint comprises a first central element, pivotable integrally to the tilting frame, and a vertical upright, which is integral with such central element. The upright carries a pair of rods, connected to their respective elastic means (mechanical, pneumatic, etc.) which are in turn hinged to the two-wheeled trailer.

In this way, when the tilting frame tilts to the side, the elastic elements counteract the tilt, restoring or maintaining the vertical configuration. The stiffness of such elastic elements is appropriately calibrated in such a way as to hold the tilting frame in an upright position when the vehicle is stationary, but without excessively hindering the rideability of the vehicle, so that the rider may tilt the tilting frame as required when the vehicle is in operation.

The aforesaid and other objects and advantages are achieved, according to an aspect of the invention, by a suspension system for a three-wheeled vehicle having the features defined in claim 1. Preferred embodiments of the invention are defined in the dependent claims.

### Brief description of the drawings

The functional and structural features of some preferred embodiments of a suspension system for a three-wheeled vehicle according to the invention will now be described. Reference is made to the accompanying drawings, wherein:
- figure 1 is a schematic perspective view of a three-wheeled vehicle according to an embodiment of the present invention;

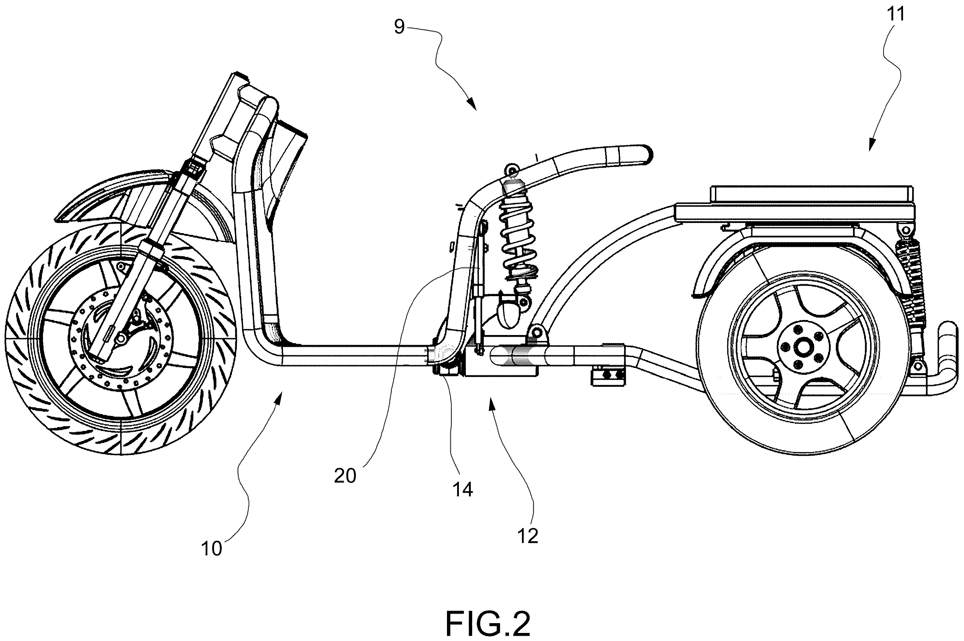

- figure 2 is a schematic lateral view of the vehicle illustrated in figure 1;

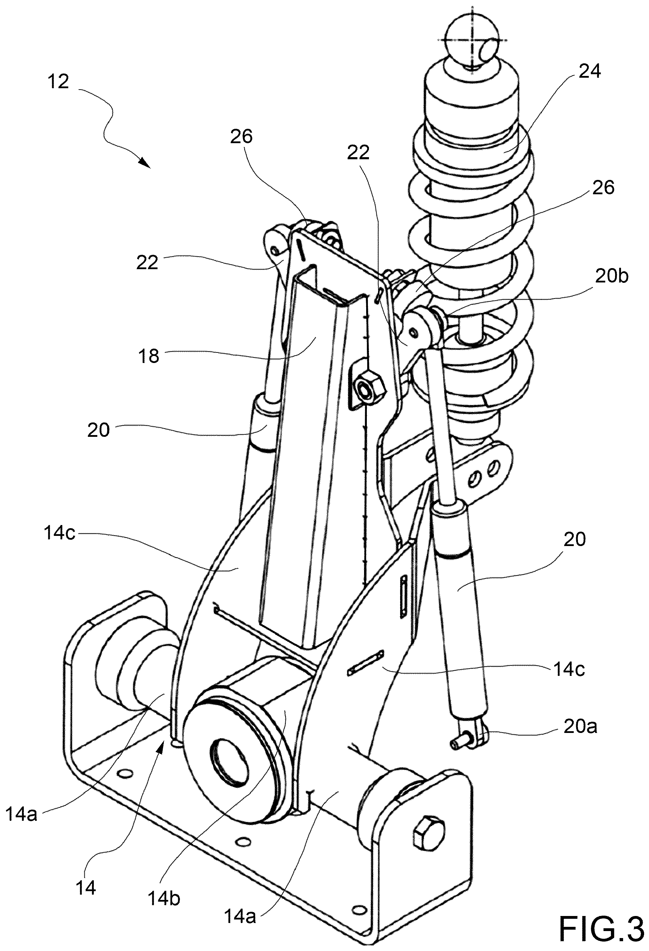

- figure 3 is a schematic perspective view of an oscillating joint according to an embodiment of the present invention;

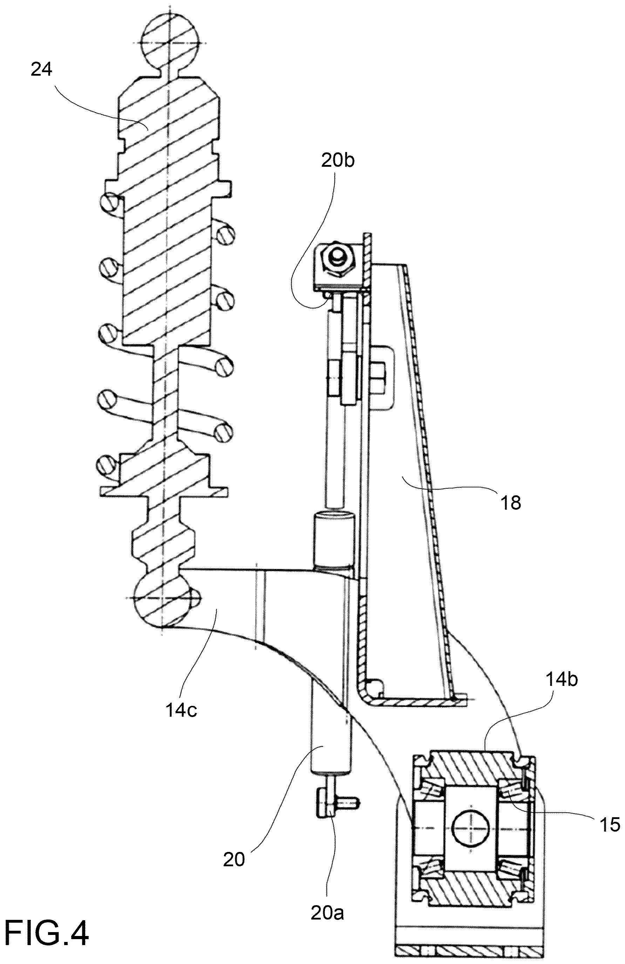

- figure 4 is a schematic view of the lateral cross section of the oscillating joint in figure 3; and
- figures 5 and 6 are schematic views from the front of the oscillating joint in figure 3, respectively in a vertically aligned and laterally tilted condition.

### Detailed Description

Before describing in detail a plurality of embodiments of the invention, it should be clarified that the invention is not limited in its application to the details of construction or to the configuration of the components provided in the following description or illustrated in the drawings. The invention may assume other embodiments and may be implemented or achieved in essentially different ways. It should also be understood that the phraseology and terminology have descriptive purposes and should not be construed as limiting.

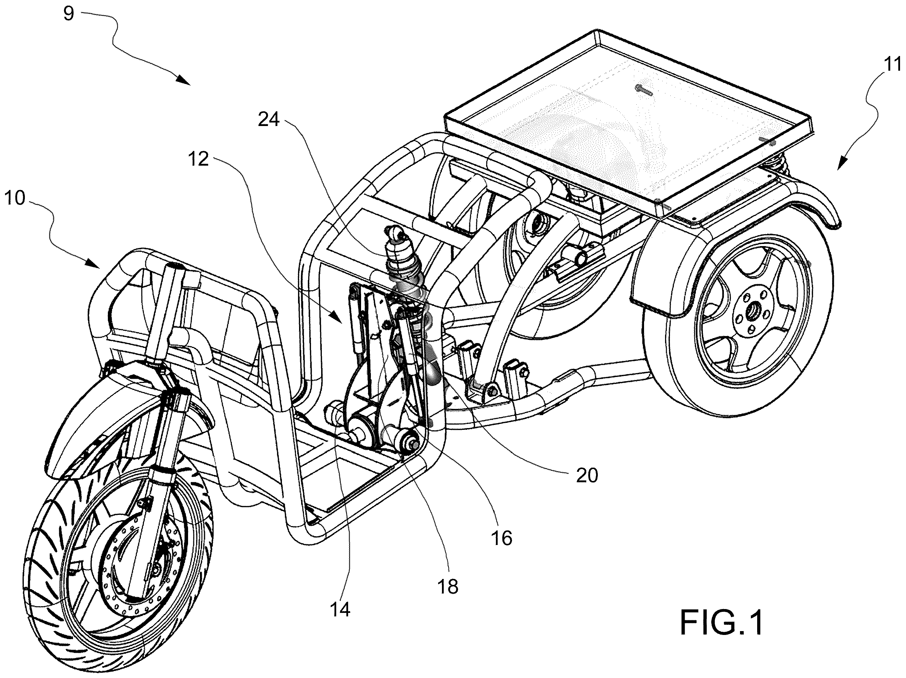

By way of example, with reference to figure 1, a three-wheel vehicle 9 of a known type (generally a motorcycle or a moped or motorized tricycle) comprises a tilting frame 10, pivotable with respect to a horizontal axis, and a two-wheeled trailer 11, equipped with a pair of wheels symmetrical with respect to a center line of the vehicle. The tilting frame 10 (which, in the example shown, is located in front of the two-wheeled trailer 11, relative to the direction of travel of the vehicle 9) is capable of rolling about a longitudinal axis thereof. The two-wheeled trailer 11 (which, in the example shown, is located in a rear part of the vehicle 9) comprises a pair of wheels symmetrical with respect to a longitudinal centerline of the vehicle 9. The two-wheeled trailer 11 is generally motorized (in a way not shown), while the tilting frame 10 generally accommodates or supports the rider. The two-wheeled trailer 11 may assume different configurations from the one illustrated herein by way of example; for example, the wheels may be closer together, optionally until they are within the profile of the tilting frame 10, there may be a suspension system (not illustrated), etc.

In the following description, reference will be made to the configuration wherein the tilting frame 10 is placed in a front part of the vehicle 9, with respect to the direction of travel. It is understood that what will be said with reference to such configuration also applies, *mutatis mutandis,* to the opposite configuration, wherein the two-wheeled trailer 11 is located in a front part of the vehicle, in relation to the tilting frame 10. The person skilled in the art will understand that the same principles set out below, with reference to a specific vehicle configuration, may easily be applied to the opposite configuration.

The two parts 10, 11 of the vehicle 9 are connectable by means of an oscillating joint 12, comprising a first connecting element 14, capable of oscillating integrally with the tilting frame 10, and a second connecting element 16, capable of being mounted integrally to the two-wheeled trailer 11.

The oscillating joint 12 also comprises a support upright 18, and at least one pair of elastic elements 20, each having a first end 20a hinged to the second connecting element 16.

The support upright 18 is pivotable integrally with the first connecting element 14 and bears at least one pair of rods 22, each having an end hinged to such support upright 18, and an opposite end connected to a second end 20b of a respective elastic element 20.

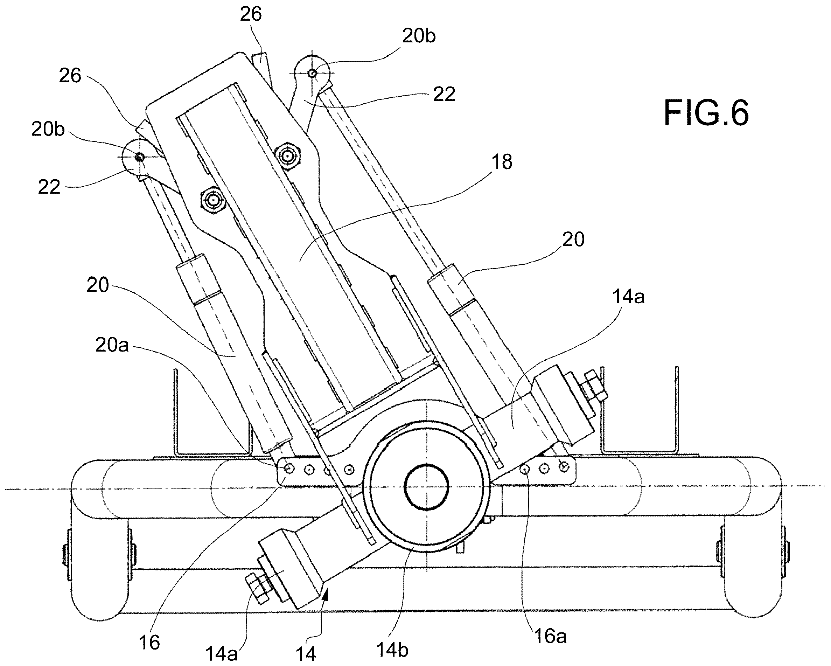

In this way, when the oscillating joint 12 is mounted on a three-wheeled vehicle 9, the elastic elements 20 are simultaneously connected both to the support upright 18, which is movable integrally with the tilting frame 10, and to the second connecting element 16, which is fixed and integral to the two-wheeled trailer 11. Thus, if the tilting frame 10 were to tilt to one side (as may be seen, for example, in figure 6), the elastic elements 20 would counteract the tilting movement, as they are held in place by the second connecting element 16, to which they are fixed.

The rotation of the rods 22 allows the inclination of the elastic elements 20 to be optimally adjusted, suitably spacing the second ends 20b of such elastic elements 20 from the support upright 18 when the latter is tilted to one side.

Moreover, the joint 12 is suitably configurable so that only one of the two elastic elements 20 (the one subject to compression) reacts to the inclination of the support upright 18, whereas the other elastic element 20 does not intervene, as the rotation of the respective rod 22 allows the length of such elastic element 20, which is therefore not stressed, to be maintained substantially unchanged. In other words, the rods 22 may allow the decoupling of the elastic elements 20, which intervene individually.

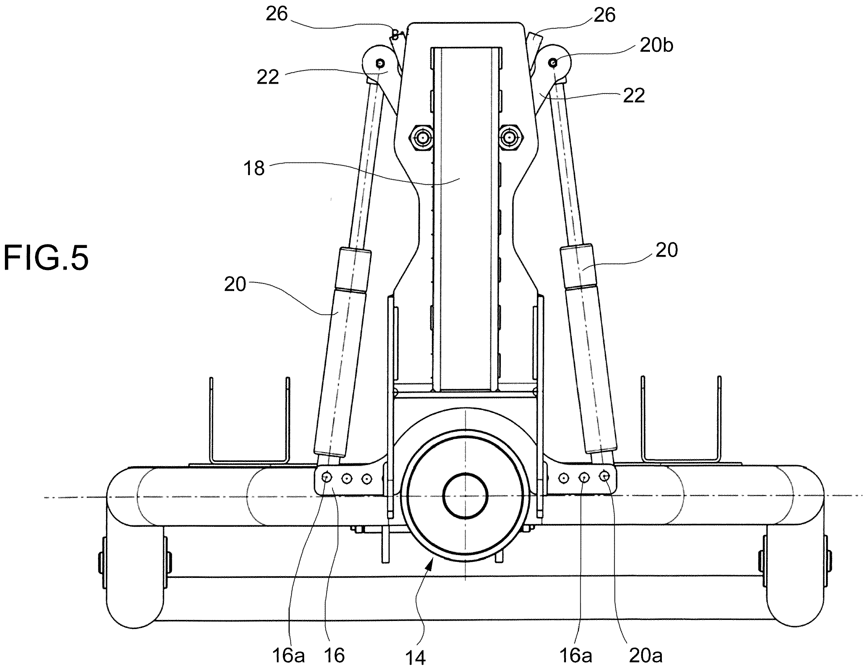

According to one embodiment, the second connecting element 16 has a plurality of connection points 16a, to which the first end 20a of each elastic element 20 may alternatively be fixed (as can be seen, for example, in figures 5 and 6), so as to change the response of the elastic element 20 with respect to the inclination of the tilting frame 10.

Preferably, the oscillating joint 12 comprises at least one spring-damping system 24 (of a type known per se, and wherein the spring and the damper are not necessarily coaxial), having one end connected to the first connecting element 14, and a second end adapted to be connected to the tilting frame 10 of the three-wheeled vehicle. The ends of the spring damper system 24 are suitably configured as ball joints.

According to one embodiment, the support upright 18 comprises at least one pair of abutments 26 protruding laterally from said support upright 18 and adapted to provide an abutment surface for the ends of the rods 22 connected to the respective elastic elements 20. The abutments 26 limit the angular excursion of the rods 22 when they rotate towards the support upright 18.

Preferably, the elastic elements 20 are gas springs, but may be any element (mechanical, pneumatic, magnetic, etc.) available to the person skilled in the art.

Moreover, the elastic elements 20 may be either constant- or variable-load elements (appropriately of the progressive type).

According to a preferred embodiment, the first connecting element 14 has a pair of coaxial primary arms 14a protruding from a central hub 14b, which may accommodate a bearing 15, and one or more secondary arms 14c, connected to these primary arms 14a and the spring-damping system 24. The secondary arms 14c form a lever that transmits a vertical oscillation of the oscillating joint 10 to the spring-damping system 24.

The central hub 14b may be used appropriately to house adjustable tapered bearings (or, according to the non-illustrated alternatives, cylindrical, ball or cartridge bearings, plain bushings, etc.), to support the joint 12 with respect to the rolling motion of the tilting frame 10.

Moreover, preferably a pair of secondary bearings (cylindrical ball, cylindrical roller, tapered, plain, etc.) may be mounted near the ends of, and coaxially with, the primary arms 14a of the first connecting element 14. These secondary bearings shall have an axis of rotation perpendicular to the axis of the central hub 14b.

Throughout the present description and in the claims, the terms and expressions indicating positions and orientations, such as "vertical" or "horizontal", refer to the normal support plane of the vehicle.

The advantage is that of providing a solution that allows a three-wheeled tilting vehicle to be supported in an upright position without the need for any kickstand.

Different aspects and embodiments of a suspension system for three-wheeled vehicles according to the invention have been described. It is understood that each embodiment may be combined with any other embodiment. The invention, moreover, is not limited to the described embodiments, but may vary within the scope defined by the accompanying claims.

## Claims

1. Oscillating joint (12) for three-wheeled vehicles equipped with a tilting frame (10) and a two-wheeled trailer (11), said oscillating joint (12) comprising:
- a first connecting element (14), adapted to oscillate integrally with the tilting frame (10) of the three-wheeled vehicle;
- a second connecting element (16), adapted to be mounted integrally to the two-wheeled trailer (11) of the three-wheeled vehicle;
- a support upright (18), pivotable integrally with the first connecting element (14);
- at least one pair of elastic elements (20) each having a first end (20a) hinged to the second connecting element (16); and
- at least one pair of rods (22) each having an end hinged to the support upright (18), and an opposite end connected to a second end (20b) of a respective elastic element (20).

2. A joint according to claim 1, wherein the second connecting element (16) has a plurality of connecting points (16a), to which the first end (20a) of each elastic element (20) is alternatively fixable, so as to change the response of the elastic element (20) to the inclination of the support upright (18).

3. A joint according to claim 1 or 2, comprising at least one spring-damping system (24) having an end connected to the first connecting element (14), and a second end adapted to being connected to the tilting frame (10) of the three-wheeled vehicle.

4. A joint according to any one of the preceding claims, wherein the support upright (18) comprises at least one pair of abutments (26) protruding laterally from said support upright (18) and adapted to provide an abutment surface for the ends of the rods (22) connected to the respective elastic elements (20).

5. A joint according to any of the preceding claims, wherein the elastic elements (20) are gas springs.

6. A joint according to any one of the preceding claims, wherein the elastic elements (20) are constant-load elements.

7. A joint according to one of the claims 1 to 5, wherein the elastic elements (20) are variable-load elements.

8. A joint according to any one of the preceding claims, wherein the first connecting element (14) has a pair of coaxial primary arms (14a), protruding from a central hub (14b) suitable for housing a bearing (15), and one or multiple secondary arms (14c) connected to said primary arms (14a) and to the spring-damping system (24), said secondary arms (14c) being adapted to transmit a vertical oscillation of the oscillating joint (12) to the spring-damping system (24).

9. A three-wheeled vehicle, comprising an oscillating joint (12) according to any of the previous claims.
